# EUROPÄISCHE PATENTSCHRIFT

(11) **EP 2 010 760 B1**
(45) Veröffentlichungstag und Bekanntmachung des Hinweises auf die Patenterteilung: **05.03.2014**
(21) Anmeldenummer: 07728278.8
(22) Anmeldetag: 19.04.2007
(51) Int. Cl.: F01M 13/00

(54) **ENTLÜFTUNGSEINRICHTUNG FÜR EINE AUFGELADENE BRENNKRAFTMASCHINE**
VENTILATION DEVICE FOR A FORCED INDUCTION INTERNAL COMBUSTION ENGINE
SYSTÈME D'AÉRATION POUR MOTEUR À COMBUSTION INTERNE SURALIMENTÉ

(30) Priorität: 25.04.2006 DE 102006019634
(43) Veröffentlichungstag der Anmeldung: 07.01.2009
(73) Patentinhaber: Mahle International GmbH, 70376 Stuttgart (DE)
(72) Erfinder: RUPPEL, Stefan, 69126 Heidelberg-Emmertsgrund (DE); BRAUN, Mirko, 75365 Calw (DE); DUNSCH, Robert, 71665 Vaihingen (DE); ÖZKAYA, Yakup, 70806 Kornwestheim (DE)
(74) Vertreter: BRP Renaud & Partner
(86) Internationale Anmeldenummer: PCT/EP2007/053816
(87) Internationale Veröffentlichungsnummer: WO 2007/122170

(56) Entgegenhaltungen:
- DE-U1- 8 809 973
- JP-A- 4 292 516
- JP-A- 55 043 221
- JP-A- 60 081 416
- JP-A- 60 209 619
- JP-U- H0 587 213
- US-A- 4 901 703
- US-A1- 2002 046 743

## Beschreibung

Die vorliegende Erfindung betrifft eine aufgeladene Brennkraftmaschine mit einer Entlüftungseinrichtung zum Abführen von Blowbygas aus einem Kurbelgehäuse der Brennkraftmaschine, insbesondere in einem Kraftfahrzeug.

Bei Brennkraftmaschinen, die als Kolbenmotor ausgestaltet sind, treten im Betrieb sogenannte Blowbygase aus Brennräumen der Brennkraftmaschine in ein Kurbelgehäuse der Brennkraftmaschine ein. Die Menge der anfallenden Blowbygase hängt vom Betriebszustand der Brennkraftmaschine, z.B. Lehrlauf oder Volllast, ab. Um einen unzulässig hohen Überdruck im Kurbelgehäuse zu vermeiden, müssen die Blowbygase aus dem Kurbelgehäuse abgeführt werden. Dabei ist eine Emission der Blowbygase in die Umgebung aus Umweltschutzgründen unerwünscht.

Dementsprechend umfasst eine Entlüftungseinrichtung üblicherweise eine Leitung, die einenends an das Kurbelgehäuse angeschlossen ist und die anderenends an eine Frischgasleitung der Brennkraftmaschine angeschlossen ist. Die Blowbygase werden so erneut der Brennkraftmaschine zur Verbrennung zugeführt. Um die Emission von Blowbygasen in die Umgebung ausschließen zu können, ist es zweckmäßig, die Blowbygase aus dem Kurbelgehäuse abzusaugen, derart, dass sich dabei im Kurbelgehäuse ein Unterdruck einstellt. Ein derartiger Unterdruck steht in der Frischluftleitung zumindest bei Saugmotoren, insbesondere nach einer Drosselklappe, regelmäßig zur Verfügung. Allerdings können bei bestimmten Betriebszuständen in der Frischgasleitung Unterdrücke entstehen, die so groß sind, dass sie zu einer Zerstörung des Kurbelgehäuses führen können. Mit Hilfe von Unterdruckregelventilen wird dabei versucht, den Unterdruck im Kurbelgehäuse auf einen vorbestimmten Wert einzustellen.

Bei aufgeladenen Brennkraftmaschinen entstehen zusätzliche Probleme dadurch, dass eine Einleitung der Blowbygase stromauf der jeweiligen Ladeeinrichtung an sich unerwünscht ist, um eine Verschmutzung derselben zu vermeiden. Auf der Druckseite der Ladeeinrichtung steht jedoch nur dann ein hinreichender Unterdruck zur Verfügung, wenn die Brennkraftmaschine im Leerlaufbetrieb oder in einem unteren Teillastbetrieb arbeitet.

Eine Entlüftungseinrichtung umfasst vorzugsweise eine erste Leitung, die einenends an das Kurbelgehäuse und anderenends stromab der Ladeeinrichtung an die Frischgasleitung angeschlossen ist. Die erste Leitung enthält ein Entlüftungsventil, in der Regel ein Unterdruckregelventil, das so ausgestaltet ist, dass es ab einem vorbestimmten Grenzwert eines daran anliegenden Differenzdruck einen zur Frischgasleitung führenden Volumenstrom auf einen vorbestimmten Zielwert begrenzt. Üblicherweise kann die Entlüftungseinrichtung noch eine zweite Leitung aufweisen, die einenends stromauf der Ladeeinrichtung an die Frischgasleitung und anderenends ebenfalls an das Kurbelgehäuse angeschlossen ist. Diese zweite Leitung enthält eine Drosseleinrichtung, die so ausgestaltet ist, dass sie bei einem vorbestimmten Wert eines daran anliegenden Differenzdrucks einen zum Kurbelgehäuse führenden Volumenstrom auf einen vorbestimmten Zielwert einstellt.

Im Lehrlaufbetrieb der Brennkraftmaschine herrscht an der Anschlussstelle zwischen erster Leitung und Frischgasleitung, insbesondere wenn sich diese stromab einer Drosselklappe befindet, ein relativ starker Unterdruck, wodurch relativ viel Blowbygas aus dem Kurbelgehäuse abgeführt werden kann. Allerdings entsteht im Leerlaufbetrieb nur vergleichsweise wenig Blowbygas. Die zweite Leitung ermöglicht für diesen Betriebsfall eine Belüftung des Kurbelgehäuses, indem sie stromauf der Ladeeinrichtung angesaugte Frischluft dem Kurbelgehäuse zuführt, wodurch sich ein unzulässig großer Unterdruck im Kurbelgehäuse vermeiden lässt.

Mit zunehmender Teillast sinkt der Unterdruck an der Anschlussstelle der ersten Leitung ab, während gleichzeitig die abzuführende Blowbygasmenge im Kurbelgehäuse zunimmt. Dementsprechend nimmt die über die zweite Leitung zugeführte Frischluftmenge ab. Ab einer bestimmten Teillast reicht der an der Anschlussstelle der ersten Leitung herrschende Unterdruck nicht mehr aus, im Kurbelgehäuse den gewünschten Unterdruck einzustellen. Dabei wird der Unterdruck an der Anschlussstelle der ersten Leitung kleiner als der Unterdruck an der Anschlussstelle der zweiten Leitung. In der Folge kehrt sich die Strömungsrichtung in der zweiten Leitung um, so dass diese nun für die Entlüftung des Kurbelgehäuses sorgt. Die erste Leitung kann zweckmäßig mit einer Rückschlagsperreinrichtung ausgestattet sein, wodurch die erste Leitung in Richtung zum Kurbelgehäuse selbsttätig gesperrt wird, wenn der Druck in der Frischgasleitung an der Anschlussstelle der ersten Leitung weiter ansteigt.

Bei weiter zunehmender Teillast oder bei Volllast herrscht stromab der Ladeeinrichtung Überdruck in der Frischgasleitung. Die erste Leitung ist dann gesperrt und die Abführung der Blowbygase erfolgt ausschließlich über die zweite Leitung.

In bestimmten Betriebszuständen der Brennkraftmaschine, insbesondere bei Volllast, ist der stromauf der Ladeeinrichtung in der Frischgasleitung zur Verfügung stehende Unterdruck vergleichsweise klein, so dass eine hinreichende Absaugung der Blowbygase nicht immer gewährleistet ist. Insbesondere dann, wenn die Anschlussstelle der zweiten Leitung, z.B. aus Bauraumgründen, vergleichsweise nahe am Einlass der Ladeeinrichtung positioniert werden muss, verschärft sich die Problematik.

Darüber hinaus muss auch für die zweite Leitung eine Abscheideeinrichtung zum Entfernen von Öl bzw. Ölnebel aus dem Blowbygas einschließlich zugehöriger Ölrücklaufleitung vorgesehen werden, um auch bei der Entlüftung durch die zweite Leitung entölte Blowbygase in die Frischgasleitung einleiten zu können.

Aus der JP 60-209619 A ist eine nicht aufgeladene Brennkraftmaschine bekannt, bei der eine erste Leitung von einer Zylinderkopfhaube, die fluidisch mit einem Kurbelgehäuse verbunden ist, zu einem stromab eines Luftfilters angeordneten Abschnitt einer Frischluftleitung führt, und bei der eine zweite Leitung von der Zylinderkopfhaube zum Luftfilter führt. In dieser zweiten Leitung sind parallel zueinander eine Drosselstelle und ein in Richtung zur Zylinderkopfhaube sperrendes Rückschlagsperrventil angeordnet.

Aus der JP 05-087213 U ist eine aufgeladene Brennkraftmaschine bekannt, bei der eine erste Leitung von einem im Kurbelgehäuse angeordneten Ölabscheider zu einem Ladeluftverteiler führt, bei der eine zweite Leitung von der ersten Leitung zu einer Frischluftleitung stromauf eines Verdichters führt und bei der eine dritte Leitung von einer Zylinderkopfhaube, die fluidisch mit dem Kurbelgehäuse verbunden ist, zur Frischluftleitung stromauf des Verdichters führt. In der zweiten und in der dritten Leitung ist jeweils ein Rückschlagsperrventil angeordnet.

Aus der JP 60-081416 A ist eine weitere aufgeladene Brennkraftmaschine bekannt, bei der eine erste Leitung von einer Rohseite eines Ölabscheiders, der rohseitig mit einem Kurbelgehäuse verbunden ist, zu einer Zylinderkopfhaube führt, bei der eine zweite Leitung von einer Reinseite des Ölabscheiders zu einer Frischluftleitung stromauf eines Verdichters führt, und bei der eine dritte Leitung von der Zylinderkopfhaube zur Frischluftleitung stromab des Verdichters führt. In der zweiten Leitung ist ein Druckregelventil angeordnet.

Die vorliegende Erfindung beschäftigt sich mit dem Problem, für eine Entlüftungseinrichtung der eingangs genannten Art eine verbesserte Ausführungsform anzugeben, die sich insbesondere durch reduzierte Herstellungskosten auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die zweite Leitung nicht an das Kurbelgehäuse, sondern zwischen Kurbelgehäuse und Entlüftungsventil an die erste Leitung anzuschließen. Dabei sind das Entlüftungsventil der ersten Leitung und die Drosseleinrichtung der zweiten Leitung so aufeinander abgestimmt, dass in Betriebszuständen mit einer Blowbygaseinleitung in die Frischgasleitung stromab der Ladeeinrichtung über die zweite Leitung stets etwa soviel Frischgas dem Blowbygas zugemischt wird, dass einerseits eine zuverlässige Entlüftung des Kurbelgehäuses gewährleistet ist und andererseits der Aufbau eines unzulässig hohen Unterdrucks im Kurbelgehäuse vermieden wird. Bei Betriebszuständen mit Blowbygaseinleitung in die Frischgasleitung stromauf der Ladeeinrichtung werden die Blowbygase durch den vom Kurbelgehäuse zur Anschlussstelle der zweiten Leitung führenden Teil der ersten Leitung und ab dieser Anschlussstelle durch die zweite Leitung abgesaugt. Hierdurch nutzt die zweite Leitung den besagten Teil der ersten Leitung einschließlich einer gegebenenfalls darin angeordneten Abscheideeinrichtung mit Ölrücklauf. In der Folge kann auf eine der zweiten Leitung zugeordnete zweite Abscheideeinrichtung mit Ölrücklauf verzichtet werden, wodurch der Aufwand zur Realisierung der Entlüftungseinrichtung reduziert ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder.in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

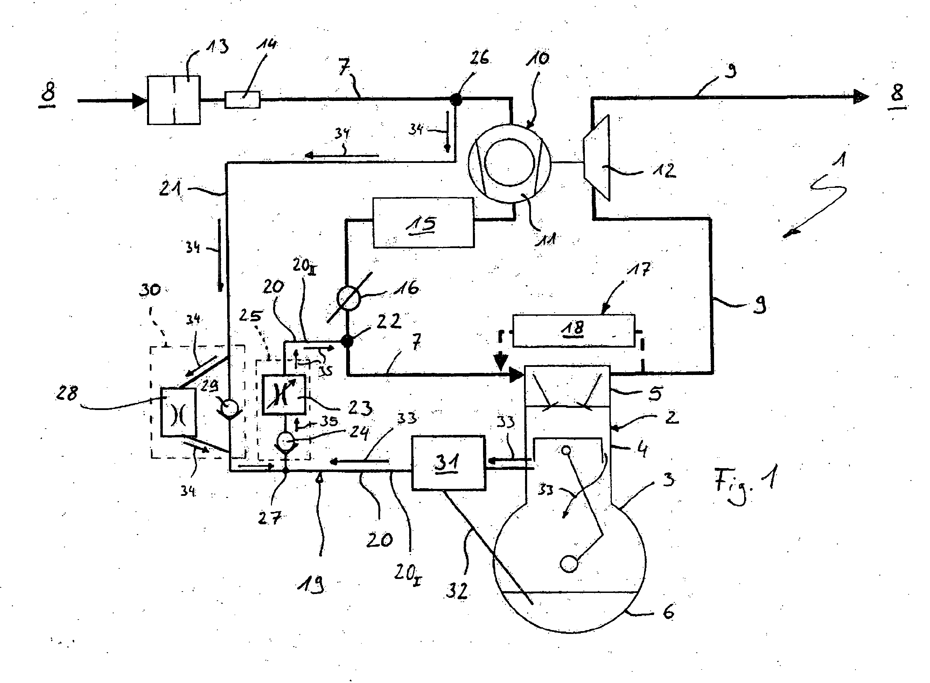

- Fig. 1 bis 3: jeweils eine stark vereinfachte, schaltplanartige Prinzipdarstellung einer Entlüftungseinrichtung bei unterschiedlichen Betriebszuständen.

Entsprechend den Fig. 1 bis 3 umfasst eine Brennkraftmaschine 1 einen Motorblock 2 mit Kurbelgehäuse 3, Zylinderkopf 4, Zylinderkopfhaube 5 und Ölwanne 6. Eine Frischgasleitung 7 führt Frischgas aus einer Umgebung 8 dem Motorblock 2 zu, während eine Abgasleitung 9 Abgas der Brennkraftmaschine 1 vom Motorblock 2 abführt und in die Umgebung 8 emittiert. Die Brennkraftmaschine 1 ist vorzugsweise in einem Kraftfahrzeug angeordnet. Die Brennkraftmaschine 1 ist aufgeladen und weist dementsprechend eine Ladeeinrichtung 10 auf, die im vorliegenden Fall beispielhaft als Abgasturbolader ausgestaltet ist. Dementsprechend umfasst die Ladeeinrichtung 10 einen Verdichter 11, der in der Frischgasleitung 7 angeordnet ist, sowie eine Turbine 12, die in der Abgasleitung 9 angeordnet ist. Es ist klar, dass die Brennkraftmaschine 1 auch mit einer anderen Ladeeinrichtung 10 ausgestattet sein kann, wie z.B. ein mechanischer Lader, insbesondere ein Rootsgebläse.

Die Frischgasleitung 7 enthält eingangsseitig ein Luftfilter 13 sowie stromab davon eine Luftmengen- oder Luftmassen-Messeinrichtung 14, die beispielsweise als Heißfilmmesser ausgestaltet ist. Stromab der Ladeeinrichtung 10 enthält die Frischgasleitung 7 einen Ladeluftkühler 15 sowie stromab davon eine Drosselklappe 16.

Desweiteren ist die Brennkraftmaschine 1 mit einer Abgasrückführeinrichtung 17 ausgestattet, die hier vereinfacht wiedergegeben und lediglich durch einen Abgäsrückführkühler 18 repräsentiert ist.

Außerdem ist die Brennkraftmaschine 1 mit einer Entlüftungseinrichtung 19 ausgestattet, mit deren Hilfe im Betrieb der Brennkraftmaschine 1 Blowbygas aus dem Kurbelgehäuse 3 abgeführt werden kann. Derartiges Blowbygas tritt im Betrieb der Brennkraftmaschine 1 aufgrund von Leckagen aus nicht näher bezeichneten Zylinderräumen des Motorblocks 2 in das Kurbelgehäuse 3 ein.

Die Entlüftungseinrichtung 19 umfasst eine erste Leitung 20 sowie eine zweite Leitung 21. Die erste Leitung 20 ist einenends an das Kurbelgehäuse 3 und anderenends an die Frischgasleitung 7 über eine erste Anschlussstelle 22 angeschlossen ist. Die erste Anschlussstelle 22 befindet sich dabei stromab der Ladeeinrichtung 10 und insbesondere stromab der Drosselklappe 16. Gleichzeitig ist die erste Anschlussstelle 22 innerhalb der Frischgasleitung 7 stromauf einer nicht näher bezeichneten Einleitstelle der Abgasrückführeinrichtung 17 positioniert. Die erste Leitung 20 enthält ein Entlüftungsventil 23; das quasi als Unterdruckregelventil ausgestaltet sein kann. Das Entlüftungsventil 23 ist so ausgebildet, dass es ab einem vorbestimmten Grenzwert eines daran anliegenden Differenzdrucks einen zur Frischgasleitung 7 führenden Volumenstrom auf einen vorbestimmten Zielwert begrenzt.

Bei den hier gezeigten Beispielen ist in der ersten Leitung 20 außerdem eine Rückschlagsperreinrichtung 24 angeordnet, die in Richtung zum Kurbelgehäuse 3 sperrt-und in Reihe zum Entlüftungsventil 23 wirksam ist. Vorzugsweise ist die Rückschlagsperreinrichtung 24 in das Entlüftungsventil 23 integriert, wodurch eine einheitliche Baugruppe 25 entsteht, die durch ein Entlüftungsventil mit integrierter Rückschlagsperrfunktion gebildet ist.

Die zweite Leitung 21 ist einenends bei einer zweiten Anschlussstelle 26, die sich stromauf der Ladeeinrichtung 10 befindet, an die Frischgasleitung 7 angeschlossen, während sie anderenends bei einer dritten Anschlussstelle 27 an die erste Leitung 20 angeschlossen ist. Die dritte Anschlussstelle 27 befindet sich dabei zwischen dem Kurbelgehäuse 3 und dem Entlüftungsventil 23. Sofern die Rückschlagsperreinrichtung 24 bzw. die Baugruppe 25 vorhanden ist, befindet sich diese zwischen der ersten Anschlussstelle 22 und der dritten Anschlussstelle 27.

Die zweite Leitung 21 enthält eine Drosseleinrichtung 28, die so ausgebildet ist, dass sie für einen vorbestimmten Wert eines daran anliegenden Differenzdrucks einen zur ersten Leitung 20 führenden Volumenstrom auf einen vorbestimmten Zielwert einstellt. Bei der hier gezeigten, bevorzugten Ausführungsform kann die zweite Leitung 21 außerdem mit einem Rückschlagsperrventil 29 ausgestattet sein, das in Richtung zur erste Leitung 20 sperrt. Dabei sind Rückschlagsperrventil 29 und Drosseleinrichtung 28 parallel durchströmbar angeordnet, wodurch die Drosseleinrichtung 28 einen das Rückschlagsperrventil 29 umgehenden Bypass bildet, der im folgenden ebenfalls mit 28 bezeichnet ist. Vorzugsweise können das Rückschlagsperrventil 29 und die Drosseleinrichtung 28 ebenfalls ein integrales Bauteil 30 bilden. Dieses Bauteil 30 ist insbesondere durch das Rückschlagsperrventil 29 mit integriertem Bypass 28 gebildet. Durch die dritte Anschlussstelle 27 ist die erste Leitung 20 in einen ersten Leitungsteil 20_{I}, der sich vom Kurbelgehäuse 3 bis zur dritten An,schlussstelle 27 erstreckt, und einen zweiten Leitungsteil 20_{II} unterteilt, der sich von der ersten Anschlussstelle 22 bis zur dritten Anschlussstelle 27 erstreckt. Im ersten Leitungssteil 20_{I} enthält die erste Leitung 20 eine Abscheideeinrichtung 31, die dazu ausgebildet ist, im Betrieb der Brennkraftmaschine 1 Öl und/oder Ölnebel aus dem aus dem Kurbelgehäuse 3 abgesaugten Blowbygas zu entfernen. Das abgeschiedene Öl kann über eine Rücklaufleitung 32 von der Abscheideeinrichtung 31 in das Kurbelgehäuse 3, vorzugsweise in die Ölwanne 6, rückgeführt werden.

Die erfindungsgemäße Entlüftungseinrichtung 19 arbeitet wie folgt:
In einem in Fig. 1 wiedergegebenen ersten Betriebszustand arbeitet die Brennkraftmaschine 1 in einem Leerlaufbetrieb, also in einem Betriebszustand mit minimaler Last. In diesem Betriebszustand tritt vergleichsweise wenig Blowbygas in das Kurbelgehäuse 3 ein. Gleichzeitig ist die Ladeeinrichtung 10 im wesentlichen inaktiv; zumindest bewirkt die Drosselklappe 16 eine starke Drosselung, wodurch stromab der Drosselklappe 16 in der Frischgasleitung 7 ein vergleichsweise großer Unterdruck herrscht. Dieser Unterdruck ist so groß, dass er oberhalb des Grenzwerts des Entlüftungsventils 23 und oberhalb des bestimmten Werts vor der Drosseleinrichtung 28 liegt. Dementsprechend lässt das Entlüftungsventil 23 den vorbestimmten Volumenstrom durch. Gleichzeitig lässt auch die Drosseleinrichtung 28 einen Volumenstrom durch, der jedoch kleiner ist als der vorbestimmte Volumenstrom des Entlüftungsventils 23. Das Entlüftungsventil 23 und die Drosseleinrichtung 28 sind dabei gezielt so aufeinander abgestimmt, dass in diesem Betriebsfall mit minimaler aus dem Kurbelgehäuse 3 abzuführender Blowbygasmenge aus dem Kurbegehäuse 3 gerade soviel Blowbygas abgesaugt wird, dass sich im Kurbelgehäuse 3 ein vorbestimmter Unterdruck einstellen kann. Insbesondere soll der Unterdruck im Kurbelgehäuse 3 in diesem Betriebszustand nicht beliebig weit absinken. Dementsprechend wird in diesem Betriebszustand der über den zweiten Leitungsteil 20_{II} in die Frischgasleitung 7 abgeführte Volumenstrom zu einem Teil durch die abzuführende Blowbygasmenge, die über den ersten Leitungsteil 20_{I} dem Kurbelgehäuse 3 entnommen wird, und im übrigen durch eine entsprechende Frischgasmenge gebildet, die über die zweite Leitung 21 der Frischgasleitung 7 stromauf der Ladeeinrichtung 10 entnommen wird.

Mit zunehmender Last der Brennkraftmaschine 1 nimmt auch die Menge der im Kurbelgehäuse 3 anfallenden Blowbygase zu, so dass entsprechend mehr Blowbygas abgeführt werden muss. Aufgrund der Drosselwirkung der Drosseleinrichtung 28 nimmt dabei gleichzeitig der Volumenstrom des dem Blowbygas zugemischten Frischgases in entsprechender Weise ab.

Die Blowbygasströmung ist in Fig. 1 durch Pfeile 33 symbolisiert. Die Frischgasströmung ist in Fig. 1 durch Pfeile 34 symbolisiert und die sich aus Blowbygas und Frischgas zusammensetzende Gemischströmung ist in Fig. 1 durch Pfeile 35 symbolisiert.

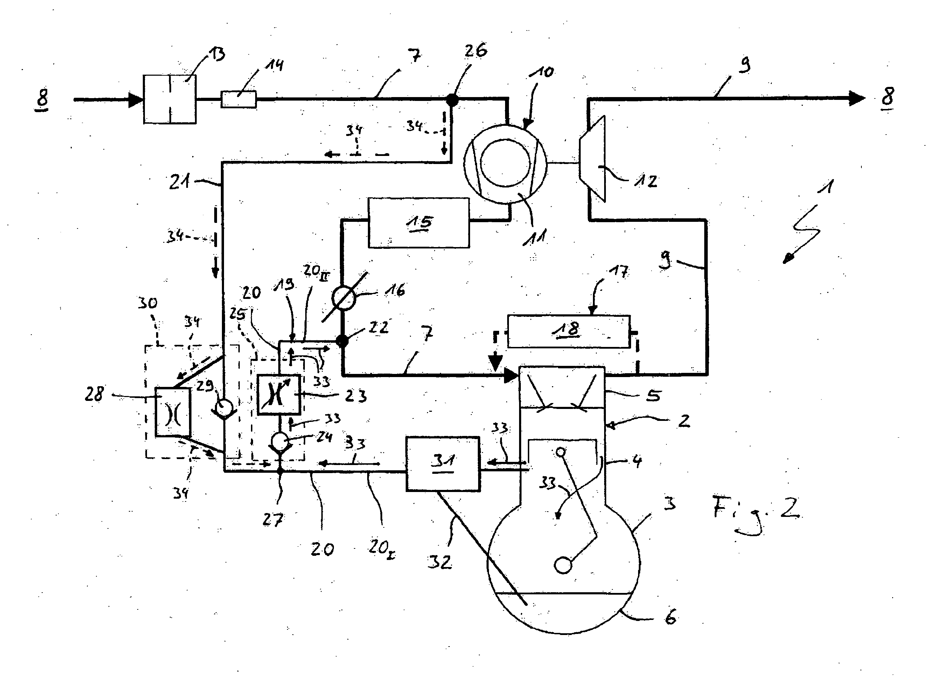

Fig. 2 zeigt einen Betriebszustand der Brennkraftmaschine 1 bei Teillast, bei dem an der ersten Anschlussstelle 22 in der Frischgasleitung 7 nur noch ein vergleichsweise kleiner Unterdruck vorliegt, der gerade noch so groß ist, dass die gesamte anfallende Blowbygasmenge noch über die erste Leitung 20 aus dem Kurbelgehäuse 3 abgeführt und in die Frischgasleitung 7 eingeleitet werden kann. Hierzu eignet sich in besondere Weise ein Entlüftungsventil 23, das sich durch eine Kennlinie charakterisiert, bei der mit zunehmender Druckdifferenz der das Entlüftungsventil 23 durchströmende Volumenstrom zunächst (linear) zunimmt, dann bei einem mittleren Differenzdruck ein Maximum für den Volumenstrom aufweist und bei weiter zunehmender Druckdifferenz bis zum vorbestimmten Zielwert (linear) abfällt, der bei weiter zunehmender Druckdifferenz konstant bleibt. Zweckmäßig liegt besagtes Maximum im Bereich einer Druckdifferenz, die bei dem in Fig. 2 wiedergegebenen Betriebszustand der Brennkraftmaschine 1 am Entlüftungsventil 23 anliegt. In diesem Betriebszustand ist die über die zweite Leitung 21 dem Blowbygas zugemischte Frischgasmenge sehr klein und kann sogar auf den Wert Null zurückgehen. Zur Verdeutlichung sind die Strömungspfeile für die Frischgasströmung 34 mit unterbrochenen Linien dargestellt.

Da die Frischgasströmung 34 in diesem Betriebszustand quasi vernachlässigbar ist, liegt die Blowbygasströmung 33 hier auch in der zweiten Teilleitung 20_{II} vor.

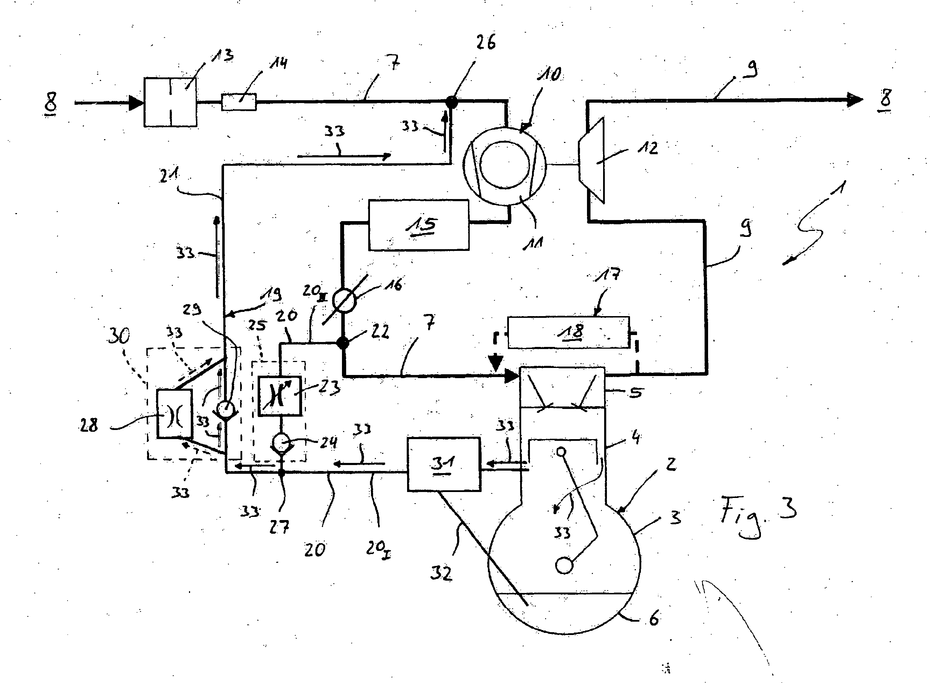

Bei weiter zunehmender Last, insbesondere bei Volllast, stellt sich der in Fig. 3 gezeigte Zustand ein. Zum einen wird der sich an der ersten Anschlussstelle 22 einstellende Unterdruck zu klein, um die anfallende Blowbygasmenge absaugen zu können. Zum anderen kann sich an der ersten Anschlussstelle 22, insbesondere durch die Zuschaltung oder Aktivierung der Ladeeinrichtung 10 in Verbindung mit einer entsprechenden Drosselklappenstellung, ein Überdruck aufbauen, der es unmöglich macht, Blowbygas über die erste Anschlussstelle 22 in die Frischgasleitung 7 einzuleiten. Die Rückschlagsperreinrichtung 24 sperrt bei Überdruck an der ersten Anschlussstelle 22.

Mit zunehmendem Druck an der Druckseite der Ladeeinrichtung 10 nimmt der Druck an der Saugseite der Ladeeinrichtung 10 ab. In der Folge entsteht an der zweiten Anschlussstelle 26 ein Unterdruck, der ausreicht, die im Kurbelgehäuse 3 anfallenden Blowbygase abzusaugen. Dies ist grundsätzlich über die Drosseleinrichtung 28 möglich, was hier durch unterbrochen dargestellte Strömungspfeile angedeutet ist. Jedoch öffnet in dieser Strömungsrichtung das Rückschlagsperrventil 29, so dass die Blowbygasströmung 33, zumindest deren Hauptteil, durch das Rückschlagsperrventil 29 strömt.

Vorzugsweise ist das Rückschlagsperrventil 29 so ausgelegt, dass sein Öffnungswiderstand und sein Durchströmungswiderstand kleiner sind als der Durchströmungswiderstand des Bypasses bzw. der Drosseleinrichtung 28. Insbesondere sind der Öffnungswiderstand und der Durchströmungswiderstand des Rückschlagsperrventils 29 so ausgewählt, dass der an der zweiten Anschlussstelle 26 herrschende Unterdruck ausreicht, die in diesem Betriebszustand oder Zustandsbereich anfallende Blowbygasmenge aus dem Kurbelgehäuse 3 abzusaugen. Hierdurch kann im Kurbelgehäuse 3 ein vorbestimmter Unterdruck eingestellt werden. Die zweite Leitung 21 ist in der Öffnungsrichtung des Rückschlagsperrventils 29 aufgrund der sehr kleinen Widerstände für Öffnung und Durchströmung des Rückschlagsperrventils 29 quasi entdrosselt, wodurch es insbesondere möglich ist, die zweite Anschlussstelle 26 relativ nahe an einem Einlass der Ladeeinrichtung 10 zu positionieren.

Bemerkenswert ist hierbei, dass auch bei einer BlowbygasEinleitung über die zweite Anschlussstelle 26, also stromauf der Ladeeinrichtung 10 der erste Leitungsteil 20_{I} der ersten Leitung 20 vom Blowbygas durchströmt wird. Dementsprechend wird die darin angeordnete Abscheideeinrichtung 31 auch bei dieser Betriebssituation genutzt. Eine ausschließlich der zweiten Leitung 21 zugeordnete, zusätzliche Abscheideeinrichtung ist dadurch entbehrlich.

Desweiteren ist bemerkenswert, dass die erfindungsgemäße Entlüftungseinrichtung 19 in allen Betriebsbereichen der Brennkraftmaschine 1 ohne eine Belüftung des Kurbelgehäuses 3 arbeitet. Somit können Maßnahmen zur Belüftung des Kurbelgehäuses 3 entfallen.

## Patentansprüche

1. Aufgeladene Brennkraftmaschine (1), insbesondere in einem Kraftfahrzeug, mit einer Entlüftungseinrichtung (19) zum Abführen von Blowbygas aus einem Kurbelgehäuse (3) der Brennkraftmaschine (1), umfassend
- eine erste Leitung (20), die einenends an das Kurbelgehäuse (3) angeschlossen ist und die anderenends stromab einer Ladeeinrichtung (10) der Brennkraftmaschine (1) an eine Frischgasleitung (7) der Brennkraftmaschine (1) angeschlossen ist,
- eine zweite Leitung (21), die einenends stromauf der Ladeeinrichtung (10) an die Frischgasleitung (7) angeschlossen ist und die eine Drosseleinrichtung (28) enthält,
- wobei die erste Leitung (20) zwischen der Frischgasleitung (7) und einer Anschlussstelle (27), an welcher die zweite Leitung (21) an die erste Leitung (20) angeschlossen ist, eine Rückschlagsperreinrichtung (24) enthält, die von der Frischgasleitung (7) zur Anschlussstelle (27) sperrt,
- wobei die Drosseleinrichtung (28) so ausgestaltet ist, dass sie bei einem vorbestimmten Wert eines daran anliegenden Differenzdrucks einen zur ersten Leitung (20) führenden Volumenstrom auf einen vorbestimmten Zielwert einstellt,
- wobei ein Entlüftungsventil (23), das so ausgestaltet ist, dass es ab einem vorbestimmten Grenzwert eines daran anliegenden Differenzdrucks einen zur Frischgasleitung (7) führenden Volumenstrom auf einen vorbestimmten Zielwert begrenzt, in der ersten Leitung (20) angeordnet ist,
- wobei in der ersten Leitung (20) zwischen dem Kurbelgehäuse (3) und dem Entlüftungsventil (23) eine Abscheideeinrichtung (31) zum Entfernen von Öl und/oder Ölnebel aus dem Blowbygas angeordnet ist,
- wobei die zweite Leitung (21) anderenends zwischen dem Entlüftungsventil (23) und der Abscheideeinrichtung (31) an die erste Leitung (20) angeschlossen ist,
- wobei die Abscheideeinrichtung (31) einen Ölrücklauf (32) zum Rückführen des abgeschiedenen Öls zum Kurbelgehäuse (3) aufweist,
- wobei die zweite Leitung (21) parallel zur Drosseleinrichtung (28) ein von der Frischgasleitung (7) zur ersten Leitung (20) sperrendes Rückschlagsperrventil (29) enthält, so dass die Drosseleinrichtung (28) einen das Rückschlagsperrventil (29) umgehenden Bypass (28) bildet,
- wobei die Drosseleinrichtung (28) in das Rückschlagsperrventil (29) integriert ist,
- wobei ein Öffnungswiderstand und ein Durchströmungswiderstand des Rückschlagsperrventils (29) kleiner sind als ein Durchströmungswiderstand des Bypasses (28) oder der Drosseleinrichtung (28).

2. Brennkraftmaschine nach Anspruch 1,
**dadurch gekennzeichnet,**
**dass** ein Öffnungswiderstand und ein Durchströmungswiderstand des Rückschlagsperrventils (29) so gewählt sind, dass in einem Volllastbetrieb der Brennkraftmaschine (1) der an einer Anschlussstelle (26), an welcher die zweite Leitung (21) an die Frischgasleitung (7) angeschlossen ist, herrschende Unterdruck ausreicht, im Kurbelgehäuse (3) einen vorbestimmten Unterdruck einzustellen oder eine vorbestimmte BlowbygasMenge abzusaugen.

3. Brennkraftmaschine nach Anspruch 1 oder 2,
**dadurch gekennzeichnet,**
**dass** die Rückschlagsperreinrichtung (24) in das Entlüftungsventil (23) integriert ist.

4. Brennkraftmaschine nach einem der Ansprüche 1 bis 3,
**dadurch gekennzeichnet,**
**dass** das Entlüftungsventil (23) und der Bypass (28) oder die Drosseleinrichtung (28) so aufeinander abgestimmt sind, dass in einem Leerlaufbetrieb der Brennkraftmaschine (1) der Druckabfall im Kurbelgehäuse (3) auf einen vorbestimmten Unterdruck begrenzt ist oder die Blowbygas-Absaugung aus dem Kurbelgehäuse (3) auf einen vorbestimmten Volumenstrom begrenzt ist.

5. Brennkraftmaschine nach einem der Ansprüche 1 bis 4,
**dadurch gekennzeichnet,**
**dass** die Entlüftungseinrichtung (19) in allen Betriebsbereichen der Brennkraftmaschine (1) ohne Belüftung des Kurbelgehäuses (3) arbeitet.

6. Brennkraftmaschine nach einem der Ansprüche 1 bis 5,
**dadurch gekennzeichnet,**
**dass** die erste Leitung (20) stromab eines Ladeluftkühlers (15) an die Frischgasleitung (7) angeschlossen ist.

7. Brennkraftmaschine nach einem der Ansprüche 1 bis 6,
**dadurch gekennzeichnet,**
**dass** die erste Leitung (20) stromab einer Drosselklappe (16) an die Frischgasleitung (7) angeschlossen ist.

8. Brennkraftmaschine nach einem der Ansprüche 1 bis 7,
**dadurch gekennzeichnet,**
**dass** die erste Leitung (20) stromauf einer Einleitstelle einer Abgasrückführeinrichtung (17) an die Frischgasleitung (7) angeschlossen ist.

9. Brennkraftmaschine nach einem der Ansprüche 1 bis 8,
**dadurch gekennzeichnet,**
**dass** die zweite Leitung (21) stromab eines Luftmassenmessers (14) an die Frischgasleitung (7) angeschlossen ist.

10. Brennkraftmaschine nach einem der Ansprüche 1 bis 9,
**dadurch gekennzeichnet,**
**dass** die zweite Leitung (21) stromab eines Luftfilters (13) an die Frischgasleitung (7) angeschlossen ist.

## Claims

1. A supercharged internal combustion engine (1), in particular in a motor vehicle, having a deaerating device (19) for removing blow-by gas from a crankcase (3) of the internal combustion engine (1), comprising
- a first line (20), which is connected to the crankcase (3) at one end and which is connected at the other end to a fresh gas line (7) of the internal combustion engine (1) downstream from a supercharging device (10) of the internal combustion engine (1),
- a second line (21) which is connected to the fresh gas line (7) at one end upstream from the supercharging device (10) and which contains a throttle device (28),
- wherein the first line (20) contains a nonreturn cutoff device (24) between the fresh gas line (7) and a connection point (27) at which the second line (21) is connected to the first line (20), this nonreturn cutoff device (24) cutting off the flow from the fresh gas line (7) to the connection point (27),
- wherein the throttle device (28) is designed so that it adjusts a volume flow leading to the first line (20) at a predetermined target value, when the applied pressure difference reaches a predetermined value,
- wherein the first line (20) contains a deaerating valve (23) that is designed so that it limits a volume flow leading to the fresh gas line (7) to a predetermined target value beyond a predetermined limit value of a pressure difference applied thereto,
- wherein the first line (20) contains between the crankcase (3) and the deareating valve (23) a separating device (31) for removing oil and/or oil mist form the blow-by gas,
- wherein the second line (21) on the other end is connected to the first line (20) between the deaerating valve (23) and the separating device (31),
- wherein the separating device (31) comprises an oil return line (32) for returning removed oil to the crankcase (3),
- wherein the second line (21) contains a nonreturn cutoff valve (29) from the fresh gas line (7) to the first line (20) in parallel with the throttle device (28) so that the throttle device (28) forms a bypass (28), which bypasses the nonreturn cutoff valve (29),
- wherein the throttle device (28) is integrated into the nonreturn cutoff valve (29),
- wherein an opening resistance and a flow-through resistance of the nonreturn cutoff valve (29) are lower than a flow-through resistance of the bypass (28) or the throttle device (28).

2. The internal combustion engine according to Claim 1,
**characterized in that**
an opening resistance and a flow-through resistance of the nonreturn cutoff valve (29) are selected so that in full load operation of the internal combustion engine (1), the vacuum prevailing at a connection point (26) at which the second line (21) is connected to the fresh gas line (7) is sufficient to set a predetermined vacuum in the crankcase (3) or to evacuate a predetermined amount of blow-by gas.

3. The internal combustion engine according to Claim 1 or 2,
**characterized in that**
the nonreturn cutoff device (24) is integrated into the deaerating valve (23).

4. The internal combustion engine according to any one of Claims 1 to 3,
**characterized in that**
the deaerating valve (23) and the bypass (28) or the throttle device (28) are coordinated with one another so that in idling operation of the internal combustion engine (1), the pressure drop in the crankcase (3) is limited to a predetermined vacuum or the blow-by gas evacuation from the crankcase (3) is limited to a predetermined volume flow.

5. The internal combustion engine according to any one of Claims 1 to 4,
**characterized in that**
the deaerating device (19) operates in all operating ranges of the internal combustion engine (1) without aeration of the crankcase (3).

6. The internal combustion engine according to any one of Claims 1 to 5,
**characterized in that**
the first line (20) is connected to the fresh gas line (7) downstream from a supercharging air cooler (15).

7. The internal combustion engine according to any one of Claims 1 to 6,
**characterized in that**
the first line (20) is connected to the fresh gas line (7) downstream from a throttle valve (16).

8. The internal combustion engine according to any one of Claims 1 to 7,
**characterized in that**
the first line (20) is connected to the fresh gas line (7) upstream from an introduction point of an exhaust gas recirculation device (17).

9. The internal combustion engine according to any one of Claims 1 to 8,
**characterized in that**
the second line (21) is connected to the fresh gas line (7) downstream from an air flow meter (14).

10. The internal combustion engine according to any one of Claims 1 to 9,
**characterized in that**
the second line (21) is connected to the fresh gas line (7) downstream from an air filter (13).

## Revendications

1. Moteur à combustion interne (1) suralimenté, en particulier dans un véhicule automobile, ayant un dispositif d'évacuation (19) destiné à évacuer des gaz de blow-by d'un carter-moteur (3) du moteur à combustion interne (1), comprenant
- une première conduite (20) qui, à une extrémité, est raccordée audit carter-moteur (3) et qui, à l'autre extrémité, en aval d'un dispositif de suralimentation (10) du moteur à combustion interne (1), est raccordée à une conduite de gaz frais (7) du moteur à combustion interne (1),
- une deuxième conduite (21) qui, à une extrémité, en amont du dispositif de suralimentation (10), est raccordée à ladite conduite de gaz frais (7) et qui contient un dispositif d'étranglement (28),
- ladite première conduite (20) comprenant, entre ladite conduite de gaz frais (7) et un point de raccordement (27) sur lequel ladite deuxième conduite (21) est raccordée à ladite première conduite (20), un dispositif antiretour (24) qui bloque dans le sens allant de ladite conduite de gaz frais (7) vers ledit point de raccordement (27),
- ledit dispositif d'étranglement (28) étant conçu de manière à ce que, à une valeur prédéterminée d'une pression différentielle y appliquée, il règle un débit volume menant vers ladite première conduite (20) à une valeur cible prédéterminée,
- un clapet de purge (23) qui est conçu de manière à ce que, à partir d'une valeur limite prédéterminée d'une pression différentielle y appliquée, il limite un débit volume menant vers ladite conduite de gaz frais (7) à une valeur cible prédéterminée, étant disposé dans ladite première conduite (20),
- dans ladite première conduite (20), entre ledit carter-moteur (3) et ledit clapet de purge (23), étant disposé un dispositif de séparation (31) destiné à éliminer de l'huile et/ou du brouillard d'huile dudit gaz de blow-by,
- ladite deuxième conduite (21) étant raccordée, à l'autre extrémité, entre le clapet de purge (23) et ledit dispositif de séparation (31), à ladite première conduite (20),
- le dispositif de séparation (31) présentant un retour d'huile (32) destiné à recycler l'huile séparée vers le carter-moteur (3),
- ladite deuxième conduite (21) comprenant, parallèlement au dispositif d'étranglement (28), un clapet antiretour (29) qui bloque dans le sens allant de ladite conduite de gaz frais (7) vers ladite première conduite (20), de sorte que ledit dispositif d'étranglement (28) forme une dérivation (28) contournant le clapet antiretour (29),
- ledit dispositif d'étranglement (28) étant intégré audit clapet antiretour (29),
- une résistance d'ouverture et une résistance de passage du clapet antiretour (29) étant inférieures à une résistance de passage de ladite dérivation (28) ou du dispositif d'étranglement (28).

2. Moteur à combustion interne selon la revendication 1, **caractérisé par le fait qu'**une résistance d'ouverture et une résistance de passage du clapet antiretour (29) sont choisies de manière à ce que, en fonctionnement à pleine charge du moteur à combustion interne (1), la dépression qui règne sur un point de raccordement (26) sur lequel ladite deuxième conduite (21) est raccordée à ladite conduite de gaz frais (7) suffit pour régler dans le carter-moteur (3) une dépression prédéterminée ou pour aspirer une quantité prédéterminée de gaz de blow-by.

3. Moteur à combustion interne selon la revendication 1 ou 2, **caractérisé par le fait que** ledit dispositif antiretour (24) est intégré au clapet de purge (23).

4. Moteur à combustion interne selon l'une quelconque des revendications 1 à 3, **caractérisé par le fait que** le clapet de purge (23) et la dérivation (28) ou le dispositif d'étranglement (28) sont accordés les uns aux autres de telle manière que, en fonctionnement au ralenti du moteur à combustion interne (1), la perte de pression dans le carter-moteur (3) soit limitée à une dépression prédéterminée ou l'aspiration de gaz de blow-by du carter-moteur (3) soit limitée à un débit volume prédéterminé.

5. Moteur à combustion interne selon l'une quelconque des revendications 1 à 4, **caractérisé par le fait que** le dispositif d'évacuation (19) travaille sans aération du carter-moteur (3) dans l'ensemble des plages de fonctionnement du moteur à combustion interne (1).

6. Moteur à combustion interne selon l'une quelconque des revendications 1 à 5, **caractérisé par le fait que** ladite première conduite (20) est raccordée en aval d'un refroidisseur intermédiaire (15) à la conduite de gaz frais (7).

7. Moteur à combustion interne selon l'une quelconque des revendications 1 à 6, **caractérisé par le fait que** ladite première conduite (20) est raccordée en aval d'un clapet d'étranglement (16) à la conduite de gaz frais (7).

8. Moteur à combustion interne selon l'une quelconque des revendications 1 à 7, **caractérisé par le fait que** la première conduite (20) est raccordée en amont d'un point d'introduction d'un dispositif de recyclage de gaz d'échappement (17) à ladite conduite de gaz frais (7).

9. Moteur à combustion interne selon l'une quelconque des revendications 1 à 8, **caractérisé par le fait que** ladite deuxième conduite (21) est raccordée en aval d'un appareil de mesure de masse d'air (14) à ladite conduite de gaz frais (7).

10. Moteur à combustion interne selon l'une quelconque des revendications 1 à 9, **caractérisé par le fait que** ladite deuxième conduite (21) est raccordée en aval d'un filtre à air (13) à la conduite de gaz frais (7).
